# EUROPEAN PATENT SPECIFICATION

(11) **EP 4 360 731 B1**
(45) Date of publication and mention of the grant of the patent: **23.07.2025**
(21) Application number: 22306625.9
(22) Date of filing: 26.10.2022
(51) Int. Cl.: B01D 25/26, B01D 25/32

(54) **SLEEVE FOR A FILTERING UNIT WITH BACKWASHING**
UMHÜLLUNG FÜR EINE FILTEREINHEIT MIT RÜCKSPÜLUNG
MANCHON POUR UNITÉ DE FILTRATION À LAVAGE À CONTRE-COURANT

(43) Date of publication of application: 01.05.2024
(73) Proprietor: Alfa Laval Moatti, 78990 Elancourt (FR)
(72) Inventor: NICOLLE, Adrien, 78990 ELANCOURT (FR)
(74) Representative: Alfa Laval Attorneys

(56) References cited:
- WO-A2-97/26969
- DE-A1- 3 235 552
- US-A- 3 520 418
- US-A1- 2017 361 249

## Description

### TECHNICAL FIELD

The present disclosure relates to a sleeve for a filtering unit with backwashing, a filtering assembly and a filtering unit with backwashing. More particularly, the disclosure relates to an improvement in the backwashing efficiency of such a filtering unit.

### TECHNOLOGICAL BACKGROUND

The International application WO 2012/028824 describes a filtering unit comprising at least two filtering elements, each filtering elements having an internal face, an external face, a filtering mesh, two concentric circular edges, respectively an inner edge and an outer edge between which said filtering mesh extends, and radial ribs provided at least on the internal face, said radial ribs extending between said concentric edges and being distributed circumferentially in order to form distinct sectors on said internal face. Said filtering elements are configured to be assembled against each other so that their respective internal faces face each other so as to define a space between them, wherein said radial ribs delimiting the sectors form circumferential compartments in said space. At least one of said inner edge and outer edge has passages respectively communicating with corresponding ones of the sectors. The filtering elements are stacked along an axial direction between a upper cover and a lower cover.

By stacking a selected number of filtering elements pairs, a desired filter area is obtained for an intended application. Typically, the fluid to be filtered penetrates into the stack via inner passages of the inner edge, passes through the filtering mesh, and, once purified, exits via outer passages defined in the outer edge. Naturally, the flow of fluid through the filtering mesh could be reversed or arranged in some other way.

The filter described in that publication further comprises a divider arranged coaxially with the filtering elements, the divider having distinct distribution columns, and a rotary backwashing distributor provided at the first cover. The rotary backwashing distributor has a shutter provided with a discharge opening and is mounted to rotate so that said discharge opening is periodically and selectively put into communication with each distribution column, whereby each distribution column periodically and selectively establishes communication between the discharge opening and respective ones of the inner passages.

In this way, periodically, the fluid flow is reversed in the sectors corresponding to inner passages in fluid communication with the discharge opening, which enables backwashing to be performed in these sectors due to the pressure gradient across the filtering mesh, i.e. the pressure gradient between the external face side and the internal face side. The fluid used for backwashing is then discharged through the discharge opening.

In some applications, typically applications having a high rate of pollution, the pressure gradient may not be sufficient to ensure a high enough backflush flow and therefore a complete backwashing of the filtering mesh. Increasing the overall backflush flow is not desired as it represents a loss of cleaned flow. This loss may be compensated by an increase of the inlet flow, but this would imply oversizing upstream devices such as pumps, heat exchangers and other ancillaries.

Document WO 9726969 A2 discloses a sleeve, wherein the apertures are organized in several circumferential rows, each circumferential row extending over a whole circumference of the sleeve.

The inventor have proposed a first solution to that problem in the European patent application filed under the number 21 305 621.1. Indeed, this application describes another backwashing system comprising a sleeve around which the filtering elements are stacked and a rotating distributor extending along the whole height of the sleeve and configured to selectively isolate apertures of the sleeve which face the inner passages of the filtering elements to enable backwashing in the corresponding sectors. In order to minimize the number of sectors which are backwashed simultaneously, and therefore optimize the pressure gradient so as to increase the backwashing efficiency, the filtering elements, together with the apertures of the sleeve, are circumferentially offset along the axial direction of the stack so as to increase the number of passage columns that can be individually isolated by the distributor.

In this document, a unique offset of half a sector is described. Of course, it would be desirable to increase the number of different offsets in order to increase the number of passage columns isolatable by the distributor. However, in practice, it is virtually impossible to provide additional offsets with the configuration disclosed in this document. Indeed, first, because of the size of each inner passage, the circumferential gap between two apertures of the sleeve is not enough to provide more than one offset aperture without overlapping at least some passage columns, which prevents the correct functioning of the backwashing. Second, such a staggered disposition of the apertures reduces the mechanical strength of the sleeve, said reduction in mechanical strength being all the more important that the number of offset apertures increases.

Thus, a need has arisen for still improving the efficiency of the backwashing. Therefore, there is a need for a new type of filtering units, or a new type of a part thereof.

### SUMMARY OF THE INVENTION

The present disclosure relates to a sleeve for a filtering unit with backwashing, the sleeve being configured to be mounted coaxially inside a stack of annular filtering elements,
comprising apertures each having an inner orifice and an outer orifice, the outer orifice of each aperture being configured to face and communicate with an inner passage of a filtering element,
wherein the apertures are organized in several circumferential rows, each circumferential row extending over a whole circumference of the sleeve, and
wherein at least some of the apertures have an outer orifice elongated in the circumferential direction.

Thanks to such a configuration, wherein the outer orifices of the apertures are elongated in the circumferential direction, that is to say in the same direction as the inner passages of the filtering element, a smooth flow is ensured at the interface with the filtering element, without a substantial pressure drop.

At least some of the apertures have an inner orifice elongated in the axial direction. In such a sleeve, the inner orifices of the apertures are elongated in the axial direction. Thanks to this special orientation, the inner orifices are better oriented with respect to the incoming flow of fluid to be filtered, the latter flowing indeed in the axial direction along the main direction of the sleeve. As a result, the pressure drop at the entrance of the inner orifice is reduced. However, since the outer orifices of the apertures are still elongated in the circumferential direction, a smooth flow is also ensured at the interface with the filtering element, without a substantial pressure drop.

Actually, the fact that the inner orifice is axial while the outer orifice is circumferential eases the direction transition of the flow of the fluid to be filtered from an axial flow within the sleeve to a radial flow within the filtering elements.

Also, thanks to this special orientation, it is possible to substantially reduce the circumferential width of the inner orifices without substantially reducing the total flow cross section of the inner orifice and, thus, without substantially increasing the pressure drop at the entrance of the apertures. Consequently, when desirable, it is possible to provide a greater number of columns of inner orifices which can be selectively isolated by a rotating distributor without overlap. As a result, the number of sectors simultaneously backwashed can be reduced.

Particularly, because of this special configuration of the apertures, and of the resulting organization of the inner and outer orifices within the sleeve, it is possible, when desirable, to increase the number of aperture columns without substantially impacting the mechanical strength of the sleeve.

In some embodiments, most of the apertures and preferably all of the apertures have an inner orifice elongated in the axial direction and an outer orifice elongated in the circumferential direction.

In some embodiments, the apertures are regularly spaced apart in each circumferential row.

In some embodiments, each row comprises the same number of apertures.

In some embodiments, each row comprises between 8 and 24 apertures, preferably between 12 and 20 apertures.

In some embodiments, the interval between each circumferential row is constant.

In some embodiments, the sleeve comprises at least 10, preferably at least 20 circumferential rows.

In some embodiments, the apertures are offset circumferentially along an axial direction of the sleeve. As explained above, such an offset enables to increase the number of columns which can be individually isolated by the distributor and, thus, to decrease the number of sectors which are backwashed simultaneously.

In some embodiments, the outer orifices of the apertures are organized in j sets such that, in each set of outer orifices of a first j set, the outer orifices of each row are aligned in the axial direction with the outer orifices of one row of a second j set, j being an integer greater or equal to 2, preferably equal to 3 or 4. As explained above, thanks to the special configuration of the apertures, it is possible to provide more than two sets of apertures whose outer orifices are offset the ones with respect to the others. Consequently, an improved backwashing can be obtained.

In some embodiments, the circumferential offset θ(1) between the outer orifices belonging to different sets of outer orifices is a multiple of a pitch θ₀ = 360°/n.j, where n is the number of apertures within each row and j is an integer greater or equal to 2, preferably greater or equal to 3, for instance equal to 3 or 4. Preferably, n is also equal to the number of sectors in each filtering elements. Preferably, j is the number of sets of outer orifices as mentioned above. Put another way, the pitch θ₀ is equal to the sector width multiplied by 1/j. Therefore, it can be noted that offsetting j times a given aperture leads to transform this aperture into an adjacent aperture of the row. Thus, due to the offset being an offset by a pitch which is a non-integer multiple of a sector, the offset of the outer orifices is precisely and uniformly controlled.

In some embodiments, the rows of each set of outer orifices come one after another alternately along the axial direction of the sleeve. The alternation between the rows having different offsets is therefore regular.

In some embodiments, the circumferential offset θ(1) between the outer orifices of any row and the outer orifices of the preceding row in the axial direction of the sleeve is equal to θ₀ = 360°/n.j, where n is the number of apertures within each row and j is an integer greater or equal to 2, preferably greater or equal to 3, for instance equal to 3 or 4. Each row is therefore regularly offset by the pitch θ₀ with respect to the proceeding row.

In some embodiments, the inner orifice of at least some apertures is circumferentially offset with respect to the center of the outer orifice of said apertures in the circumferential direction. This is preferably the case of most, or even all, of the apertures. This enables to decorrelate the position of the inner orifice from the position of the outer orifice, thereby increasing the design freedom of the sleeve. Particularly, for any aperture, it is possible to optimize the position of the inner orifice irrespective of the position of the outer orifice.

In some embodiments, the position of the inner orifice of an aperture with respect to the position of the outer orifice thereof is variable among the plurality of apertures. This enables to artificially increase the number of columns of inner orifices with respect to the number of columns of outer orifices. As a result, it is possible to increase the number of columns which can be individually isolated by the distributor and, thus, to decrease the number of sectors which are backwashed simultaneously.

In some embodiments, the sleeve comprises k types of apertures such that the circumferential offset φ(2) of the inner orifice with respect to the center of the outer orifice is equal for every aperture of a given type, k being an integer greater or equal to 2.

In some embodiments, all the apertures of a given row are of a same type.

In some embodiments, k is equal to 2 and the circumferential offset φ(2) of the inner orifice of any aperture with respect to the center of the outer orifice thereof is equal to + φ(2)λ' or - φ(2)', where φ(2)' is an angle value strictly greater than 0°, preferably greater than 1°. Preferably, this value φ(2)' is lower than 3° or 2°. Particularly, this value is preferably lower or equal to θ₀/4.

In some embodiments, with the possible exception of the first bottom rows and/or the last top rows, the rows of apertures are grouped in groups of k successive rows, all the apertures of a given group being of the same type. Consequently, a succession of one row of each set, but of the same type of apertures, can be provided before changing the type of apertures. The succession of the rows is therefore regular, so as the columns of the inner orifices. The first group at the bottom and/or the last group at the top may be incomplete, notably if the total number of rows is not a multiple of k.

In some embodiments, the inner orifices of the apertures are organized in N series such that, in each series of inner orifices, the inner orifices of any row are aligned in the axial direction with the inner orifices of the other rows, m being an integer greater or equal to 4, preferably greater or equal to 6 or 8. Thus, the number of columns which can be individually isolated by the distributor is increased and the number of sectors which are backwashed simultaneously is decreased, which improves the backwashing efficiency.

In some embodiments, some apertures comprise an inner funnel portion opening at the inner orifice and narrowing toward the outer direction. This is preferably the case of most, or even all, the apertures. This funnel portion guides the flow from the axial direction toward the radial direction and, therefore, helps to reduce the pressure drop at the entrance of the aperture.

In some embodiments, only the axial height of the inner funnel portion reduces while its circumferential width remains substantially constant.

In some embodiments, some apertures comprise an outer funnel portion opening at the outer orifice and narrowing toward the inner direction. This is preferably the case of most, or even all, the apertures. This funnel portion helps to distribute the flow over the whole width of the inner passage of the filtering element and, therefrom, over the whole width of the sector thereof.

In some embodiments, only the circumferential width of the outer funnel portion reduces while its axial height remains substantially constant.

In some embodiments, the inner and the outer funnel portions intersect. This eases the integration of both the inner and the outer funnel portions within the thickness of the sleeve. This also enables to limit the reduction in flow cross section at the junction between the inner and the outer funnel portions.

In some embodiments, the minimal flow cross section of some apertures is no less than 50%, preferably 70, preferably 90% of the flow cross section of the inner orifice thereof. This is preferably the case of most, or even all, the apertures. This limits the pressure drop within the apertures.

In some embodiments, the diameter of the sleeve is comprised between 100 and 400 mm.

In some embodiments, the height of the sleeve is lower than 3 meters, preferably lower than 2 meters.

In some embodiments, the sleeve is produced by addition manufacturing.

In other embodiments, the sleeve is produced by lost-wax casting.

The present disclosure also relates to a filtering assembly for a filtering unit with backwashing, comprising a sleeve according to any one of the preceding embodiments, and a plurality of filtering elements stacked with one another, wherein each filtering element has a filtering medium and a plurality of inner passages for conducting fluid to be filtered to the filtering medium, the inner passages opening out on compartmented sectors.

In some embodiments, the filtering elements are keyed with respect to the sleeve so that the inner passages of one of the filtering elements are offset with respect to the inner passages of an adjacent one of the filtering elements.

In some embodiments, each filtering element comprises an inner edge, an outer edge and a filtering medium extending between the inner edge and the outer edge, the filtering element having an internal face and an external face on either side of the filtering medium, wherein, on the internal face, main ribs extending between the inner edge and the outer edge are circumferentially distributed to form sectors, wherein the filtering element is adapted to be assembled against a first identical filtering element so that their facing respective internal faces define a space that is circumferentially compartmented by the contacting respective main ribs of said internal faces, wherein the inner edge has inner passages communicating with each of the sectors on the internal face.

The filtering medium may extend over part or all of the distance between the inner edge and the outer edge. One side of the filtering medium defines the internal face of the filtering element, while the opposite side of the filtering medium defines the external face of the filtering element. The filtering element may be generally flat.

The ribs defined on the internal face enable isolating a sector for backwashing. The external face needs not be compartmented. At least one outer passage may be provided on the external face on the outer edge, for purified fluid outlet and backflush inlet. Conversely, on the internal face, the outer edge may be devoid of passages, so that the fluid entering one sector via a passage must cross the filtering medium to exit that sector.

In some embodiments, the external face of the filtering element has a key for pairing the filtering element in a given position with respect to a second identical filtering element, the key being arranged such that the inner passages of the second identical filtering element are offset with respect to the passages of the filtering element.

A key is an element providing a keyed connection between the respective external faces of the reference filtering element and of the second identical filtering element. Therefore, the key predetermines the relative position of the second identical filtering element with respect to the reference filtering element, e.g. angularly. The key may include a physical element providing physical cooperation.

The key may be located between the inner edge and the outer edge, in order to reduce the bulk of the filtering element.

Particularly, this keying system can be configured in accordance with the teaching of the European patent application 21 305 621.1.

Note that the filtering elements need not be keyed with respect to one another, insofar as they are keyed with respect to a common element, here the sleeve. Hybrid solutions, where some filtering elements are keyed with respect to one another and some filtering elements are keyed to the sleeve, are also envisaged.

In some embodiments, the filtering medium comprises a mesh. In some embodiments, the mesh is sloped from one end of the inner edge to the opposite end of the outer edge, which helps increasing the filtering surface and decreasing pressure losses.

In some embodiments, the filtering assembly further comprises a rotary backwashing distributor configured to selectively isolate the inner orifices of the sleeve to enable backwashing in the corresponding sectors.

In some embodiments, the rotary backwashing distributor has an opening, said opening being periodically and selectively put into communication with at least one of the inner orifices of the sleeve.

The present disclosure also relates to a filtering unit comprising a filtering assembly according to any one of the preceding embodiments.

The above mentioned features and advantages, and others, will become apparent when reading the following detailed description of exemplary embodiments of the presented sleeve, filtering assembly and filtering unit. This detailed description refers to the accompanying drawings.

### BRIEF DESCRIPTION OF THE DRAWINGS

The invention and advantages thereof will be better understood upon reading the detailed description which follows, of embodiments of the invention given as non-limiting examples. This description refers to the appended drawings, wherein:
- Fig. 1 illustrates a filtering unit according to an example in cross-section;
- Fig. 2 is a perspective view of the internal face of a filtering element used in the filtering unit of Fig. 1;
- Fig. 3 is a perspective view of the external face of the filtering element of Fig. 2;
- Fig. 4 is a perspective view of a filtering part comprising two filtering elements stacked one on the other;
- Fig. 5 illustrates the backwashing system in cross-section in a first radial plane;
- Fig. 6 illustrates the backwashing system in cross-section in a second radial plane;
- Fig. 7 is a perspective view of the sleeve of the filtering unit of Fig. 1;
- Fig. 8 is a view of this sleeve in axial cross-section;
- Fig. 9 is a view of this sleeve in radial cross-section in a first radial plane;
- Fig. 10 is a view of this sleeve in radial cross-section in a second radial plane;
- Fig. 11 is an enlarged view of a portion of the sleeve;
- Fig. 12 is an enlarged view corresponding to the frame XII of Fig. 8.

### DETAILED DESCRIPTION OF EMBODIMENTS

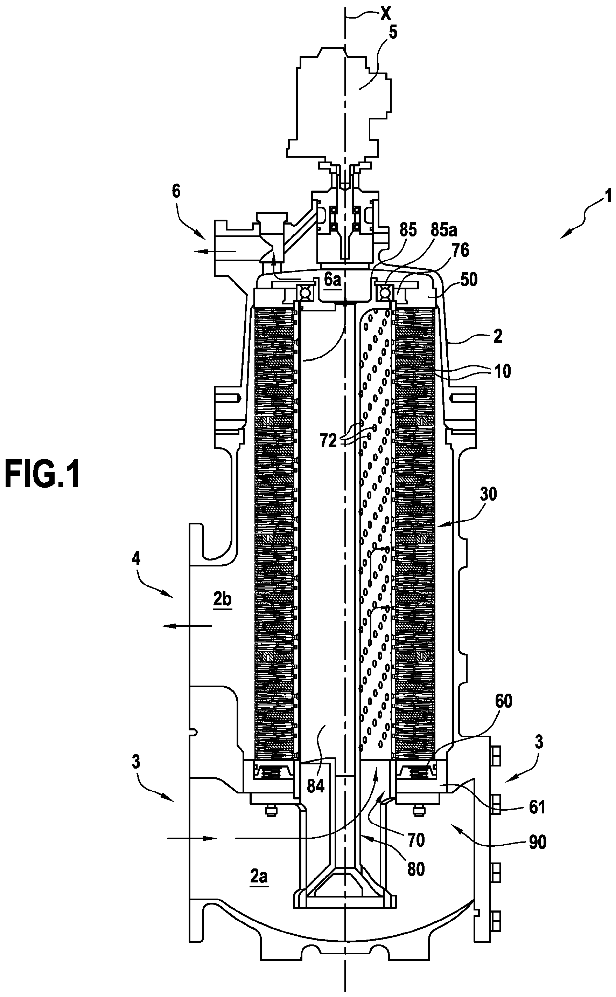

A filter 1 is shown in cross-section in Fig. 1. The filter 1 comprises a carter 2 and a filtering assembly 90.

In the present example, the filter 1 comprises two inlet portions 3 and one outlet portion 4, each arranged in the carter 2. However, the filter 1 may comprise any number of inlet portions 3 and any number of outlet portions 4. The filter 1 also comprises a backwashing motor 5 and a backwashing outlet 6 which will be presented afterwards.

The filtering assembly 90 comprises a plurality of filtering elements 10 stacked along the axial direction X of the filter 1 around a sleeve 70 and between an upper cover 50 and a lower cover 60. The filtering assembly 90 also comprises a backwashing distributor 80.

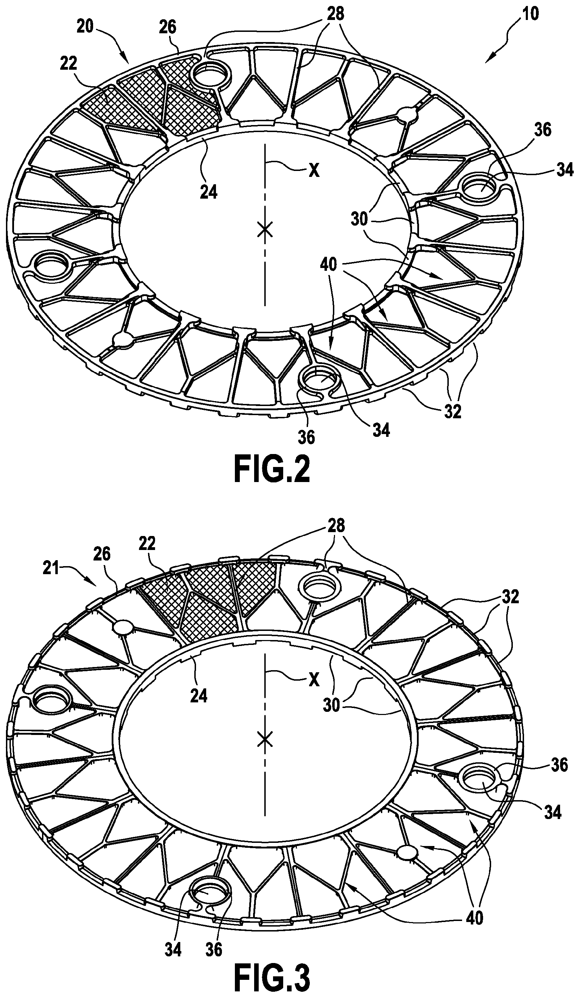

Figs. 2 and 3 depict an exemplary filtering element 10. This filtering element 10 has an internal face 20, an external face 21, a filtering mesh 22, two concentric circular edges, respectively an inner edge 24 and an outer edge 26 between which said filtering mesh 22 extends. The concentric circular edges 24, 26 are circular about a central axis X, hereafter referred to as defining an axial direction. The inner edge 24 mainly extends in a plane which is perpendicular to the axial direction X, i.e. a radial plane. The outer edge 26 mainly extends in a plane which is perpendicular to the axial direction X, i.e. a radial plane.

In this embodiment, the diameter of the outer edge 26 is about 300 mm. Of course, other diameters are possible, including, for example diameters in the range from about 100 mm to about 600 mm.

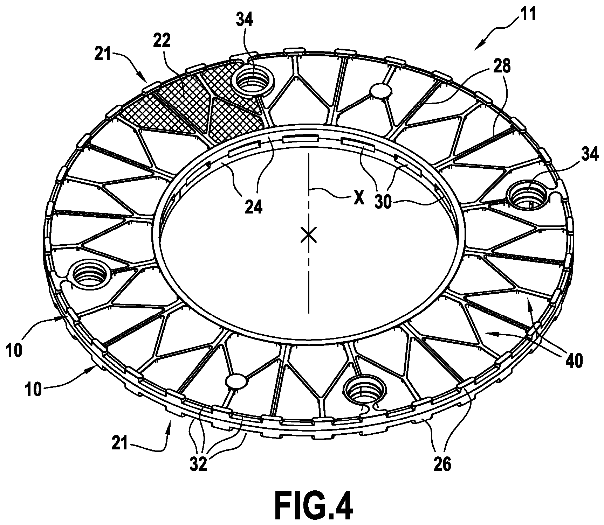

The filtering element 10 comprises main ribs 28 provided at least on the internal face 20. In this embodiment, as shown in Fig. 4, the main ribs 28 are provided on the external face 21 too. Thus, if three similar filtering elements 10 are stacked, both faces of filtering element in the middle of the stack face the respective internal faces of the two other filtering elements, and the main ribs provided on these respective faces interact to form compartments.

The main ribs 28 extend between the inner edge 24 and the outer edge 26, in the radial direction. The main ribs 28 are regularly distributed circumferentially in order to form n sectors on said internal face 20, as shown in Fig. 3. In this embodiment, the radial ribs 28 also form n sectors on said external face 21, as shown in Fig. 4. The main ribs 28 on the internal face 20 and on the external face 21 face one another on opposite sides of the filtering mesh 22. In other words, the radial ribs 28 are in axial correspondence on the internal face 20 and on the external face 21.

The inner edge 24 has inner passages 30 respectively communicating with corresponding ones of the sectors. The inner passages 30 are provided as notches or cutouts in the inner edge 24. The inner passages 30 are provided between consecutive main ribs 28. The inner passages 30 are provided on the internal face 20. The inner passages 30 have therefore an opening angle ε(0) and a height a2.

As shown in Fig. 3, the outer edge 26 has outer passages 32 respectively communicating with corresponding ones of the sectors. The outer passages 32 are provided as notches or cutouts in the outer edge 26. The outer passages 32 are provided between consecutive main ribs 28. The outer passages 32 are provided on the external face 20.

Holes 34 for passing assembly rods or assembly keys are defined in the vicinity of the outer edge 26 of each filtering element, and they are formed by molding the same material that defines the circular edges 24, 26 and the main ribs 28. Male and female bushings 36 are arranged around these holes 34, e.g. in a main rib 28, for indexing two filtering elements 10 relative to each other.

In the non-limiting example shown, each filtering element 10 is divided into sixteen sectors (n=16). Depending in particular on its diametrical size, the filtering element can have less or more sectors. For example, a filtering element having an outer diameter of 100 to 150 mm may have 8 to 12 sectors, and a filtering element having an outer diameter of 500 to 600 mm may have 20 to 24 sectors.

The filtering elements 10 may be manufactured by molding around the filtering mesh 22. In other words, they may be manufactured by injection molding or similar, wherein the filtering mesh 22 forms an insert in the mold. The molded portions may be made of metal (e.g. an aluminum alloy) or of plastics material, especially polymers. The main ribs 28 and the inner and outer edges 24, 26 may be coated in elastomer in order to avoid leaks between filtering elements 10.

Each one of the sectors is provided with at least one reinforcing rib 40 connecting a main rib 28 to the outer edge 26. In the present example, each reinforcing rib 40 has a portion that is inclined, when viewed in the radial plane in which the outer edge 26 extends, with respect to the main rib 28 and to the outer edge 26. However, other configurations are possible.

As shown in Fig. 3, the reinforcing ribs 40 are also provided on the external face 21. The reinforcing ribs 40 on the internal face 20 and on the external face 21 face one another on opposite sides of the filtering mesh 22 so as to decrease pressure losses.

As illustrated in Fig. 4, the filtering elements 10 are configured to be assembled against each other so that their respective internal faces 20 face each other so as to define a space between them. Said space is circumferentially compartmented by the contacting main ribs 28 of said internal faces. On the other hand, the main ribs 28 provided on the external face 21 do not have to contact one another. Two filtering elements 10 assembled in such a way form a filtering part 11

Then, when the filtering elements 10 are stacked so as to form the filtering assembly 90, a circumferential offset α is introduced between each successive filtering part 11. As a result, when introducing such a circumferential offset α, the main ribs 28 on the external sides 21 of two successive filtering elements 10 may not extend in correspondence; similarly, the outer passages 32 of these successive filtering elements 10 may not extend in correspondence: however, such an offset is of no consequence for the functioning of the filter.

A keying mechanism may be provided on some or all the filtering elements 10 in order to ensure that the proper circumferential offset is introduced between each filtering part 11. An exemplary keying system is for instance described in the European patent application 21 305 621.1.

The upper cover 50 rests against the casing 2 in a stacking direction of the filtering elements, here in the direction of the central axis X. Specifically, the upper cover 50 may rest against a shoulder of the casing 2, the shoulder forming a stop against axial and optionally radial movements of the upper cover 50.

The upper cover 50 may be a generally annular part. The upper cover 50 may have a central opening for insertion of the sleeve 70, as shown in Fig. 1. The first cover 50 may extend radially from the sleeve 70 and outwards at least to the outer edge 26 of the filtering elements 10. The first cover 50 and the sleeve 70 may be in sealing contact with each other, e.g. due to tight clearance between them. If needed, a gasket may be provided.

Likewise but independently, the lower cover 60 may be a generally annular part. The lower cover 60 may have a central opening for insertion of the sleeve 70, as shown in Fig. 1. The lower cover 60 may extend radially from the sleeve 70 and outwards at least to the outer edge 26 of the filtering element 10. The lower cover 60 and the sleeve 70 may be in sealing contact with each other, e.g. due to tight clearance between them. Sealing is however not required because both the sleeve 70 and the lower cover 60 are in the dirty zone 2a.

Thus, the sleeve 70 extends at least from the upper 50 to the lower cover 60.

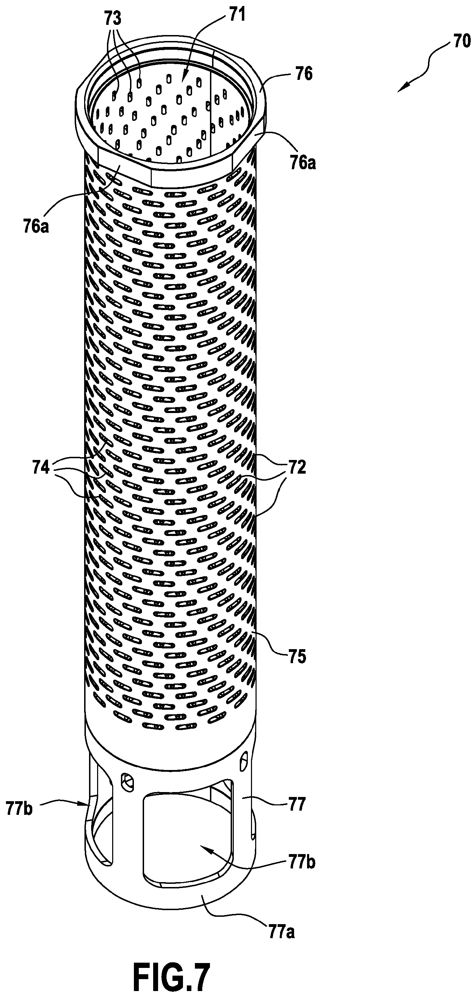

As better shown on Fig. 7, the sleeve 70 comprises apertures 72 configured to face and communicate with the inner passages 30 of the filtering elements 10. Each aperture 72 has an inner orifice 73 provided on the inner surface of the sleeve 70 and an outer orifice 74 provided on the outer surface thereof. In order to ensure proper alignment of the outer orifices 74 of the apertures 72 with the inner passages 30 of the filtering elements 10, the sleeve 70 may have a keyed connection with at least one of the first cover 50 and the second cover 60.

Besides, at least one of the first cover 50 and the second cover 60 may comprise a key for mounting one of the plurality of filtering elements in a given position with respect to said at least one of the first cover 50 and the second cover 60. Therefore, the filter 1 presents a keyed connection between the sleeve 70 and the filtering elements 10, here through at least one of the first cover 50 and the second cover 60.

Note that in addition to or instead of being keyed with respect to one another, the filtering parts 11 could be keyed with respect to the sleeve 70 so that the passages of one of the filtering parts 11 are offset with respect to the inner passages 30 of an adjacent one of the filtering parts 11. Any type of keyed connection, including those detailed above, is encompassed.

As shown schematically by arrows in Fig. 2, the fluid to be filtered enters the filters through an inlet 3 of the casing 110 and penetrates into the central conduit 71 formed by the sleeve 70 and into the apertures 72 of the sleeve 70 that are not isolated by the backwashing distributor 80. After filtering through the filtering parts 11, the filtered fluid is delivered to the outside of the filtering parts 11 and is extracted at the outlet 4 of the casing 2.

Thus, in the casing 2, the lower cover 60 separates a zone 2b of the casing 2, also called clean zone, adapted to receive the filtered fluid from a zone 2a of the casing, also called dirty zone, adapted to receive the fluid to be filtered. Thus, the pressure drop of the fluid between the dirty zone 2a and the clean zone 2b helps biasing the lower cover 60 towards the upper cover 50 and thus maintaining the filtering elements 10 in sealing contact with one another.

Besides, the filtering assembly 90 further comprises a cover backing 61. The cover backing 61 is coupled to the second lower 60 by a return system configured to return the lower cover 61 towards the upper cover 50. The cover backing 61 rests against the casing 2 in the stacking direction, for instance thanks to a shoulder of the casing 2a, the shoulder forming a stop against axial and optionally radial movements of the cover backing 61. This shoulder may have a continuous annular shape or may be provided as a plurality of discrete supports.

The cover backing 61 may be a generally annular part. The cover backing 61 may have a central opening for insertion of the sleeve 70, as shown in Fig. 1. The cover backing 61 may extend radially from the sleeve 70 and outwards at least to the outer edge 26 of the filtering elements 10.

The cover backing 61 is openwork. That is, the cover backing 61 has through openings enabling fluid to pass through, which helps maximizing the pressure difference across the second cover 60. The openings may be angularly distributed along the circumference of the cover backing 61.

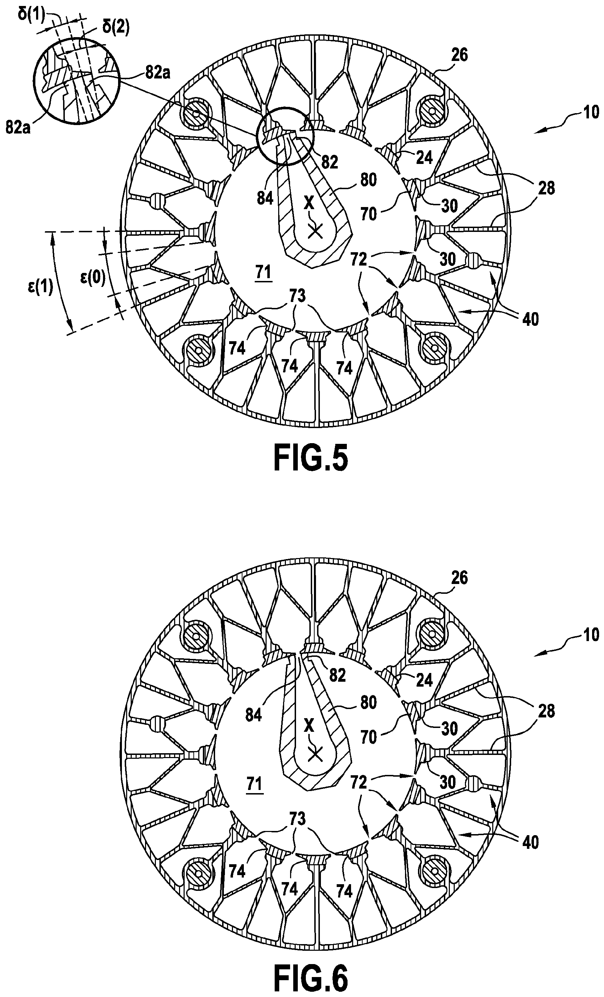

Figures 5 and 6 now illustrate the principle of backwashing the filtering elements 10. As describes above, the sleeve 70 is arranged concentrically with the filtering elements 10, radially inside the filtering elements 10. The sleeve 70 has a sealing contact with the filtering elements 10. As already explained, the inner passages 30 of the filtering elements 10 are offset circumferentially along the axial direction: as a result, the outer orifices 74 of the apertures 72 are circumferentially offset in correspondence with the inner passages 30. Furthermore, as it will be explained in greater details further in the present disclosure, the inner orifice 73 of each aperture 72 may also be circumferentially offset with respect to its outer orifice 74.

The distributor 80 is driven in rotation by the backwashing motor 5 and configured to selectively isolate inner orifices 73 of the apertures 72 of the sleeve 70 so as to isolate the corresponding sectors of the filtering elements 10. For instance, in this embodiment, the distributor 80 has a shutter 82 provided with two shutter portions 82a flanking a discharge opening 84, and is mounted to rotate, e.g. about the central axis X, so that said discharge opening 84 is periodically and selectively put into communication with each one of the inner orifices 73.

As best shown in Fig. 1, the discharge opening 84 may extend, continuously or not, axially over a plurality of filtering elements 10 so that all the inner orifices 73 which are in radial correspondence with the discharge opening 84, e.g. all the inner orifices 73 which are aligned with it, are put into communication with the discharge opening 84 at the same time. For instance, the opening 84 may be rectilinear. The opening 84 may extend parallel to the central axis X. The discharge opening 84 has an opening angle δ(1) while each shutter portion 82a has a shutter angle δ(2). Preferably, the opening angle δ(1) of the discharge opening 84 of the distributor 80 is substantially equal to the opening angle φ(1) of the inner orifices 73.

Figures 5 and 6 show that the shutter angle δ(2) of the shutter potions 82a is large enough to ensure that an inner orifice 73 is not simultaneously put in communication with the discharge opening 84 and with the central conduit 71.

Although the illustrated embodiment has a unique discharge opening 84, a plurality of discharge openings 84 may be provided. The discharge openings may be circumferentially distributed, such that the frequency of backwashing a given sector is increased without increasing the speed of the backwashing distributor 80. The plurality of discharge openings 84 may be such that when one sector is fully backwashed through one of the discharge openings 84, the other discharge openings 84 do not face any passages; otherwise, the backflush specific flow would be reduced.

Thanks to offset of the inner orifices 73 in adjacent filtering parts, the number of inner orifices 73 that are put at the same time in communication with the discharge opening 84 is reduced. Therefore, the backflush flow is divided between fewer sectors, and the specific backflush flow is increased.

Indeed, Fig. 6, which is a view similar to Fig. 5 but relating to another filtering element 10, here an adjacent filtering element 10, shows that while the discharge opening 84 is not in contact with any inner orifice 73 in the plane of Fig. 5, the discharge opening 84 communicates with an inner orifice 73 in the plane of Fig. 6. Upon rotation of the backwashing distributor 80, the shutter will shut the inner orifices 73 of Fig. 6 while the discharge opening 84 will come into contact with an inner orifice 73of another column. This configuration achieves a filter with continuous backwashing, i.e. wherein at least one sector is backwashed for every position of the backwashing distributor 80. Continuous backwashing may be obtained in other ways, e.g. with a plurality of discharge openings 84. Conversely, with an appropriate sizing of the discharge opening 84, the filter may achieve discontinuous backwashing, i.e. there would exist positions of the backwashing distributor 80 in which no sector is backwashed.

In any case, the backwashing fluid is discharged at the top of the discharged opening 84 in a discharge room 6a which lead to the backwashing discharge outlet 6. If desired, the backwashing fluid may itself be purified through another similar filtering unit.

Fig. 7 illustrates the sleeve 70 in greater details. As already explained, the sleeve 70 is cylindrical and define a central conduit 71. The sleeve 70 comprises a main portion 75, a upper rim 76 and a lower extension 77.

The main portion 75 extends over the greatest part of the sleeve 70: it is provided with the above-mentioned apertures 72.

The upper rim 76 is intended to be keyed to the upper cover 50 thanks to flat sections 76a. As shown in Fig. 2, the upper rim 76 is also configured to mount a ball bearing 85a intended to rotatably support the upper end 85 of the backwashing distributor 80. The upper end 85 of the backwashing distributor therefore tightly close the upper end of the central conduit 71.

The lower extension 77 extends along the lower cover 60 and the cover backing 61 and protrudes over the cover backing 61 into the dirty zone 2a. The lower extension 77 comprises a lower rim 77a, intended to rotatably support the lower end 86 of the backwashing distributor 80. The lower end 86 of the backwashing distributor 80 is closed so that the discharge opening 84 does not communicate with the dirty zone 2a. In addition to the lower end of the sleeve 70 which is open, the lower extension 77 comprises openings 77b enabling the fluid to be filtered to enter into the central conduit 71.

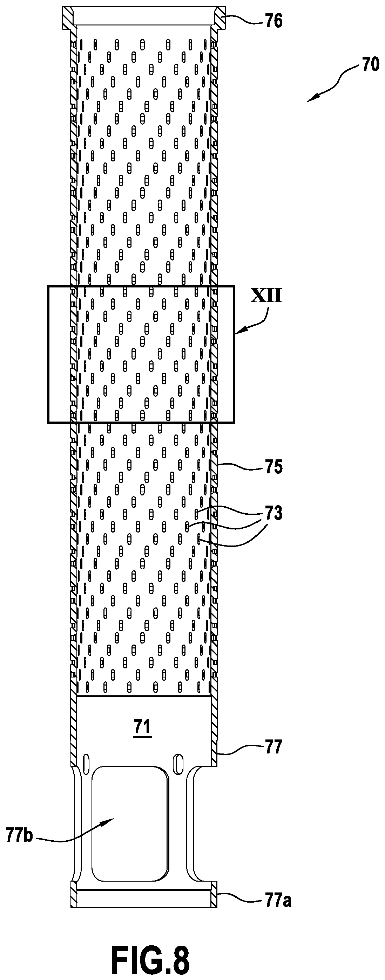

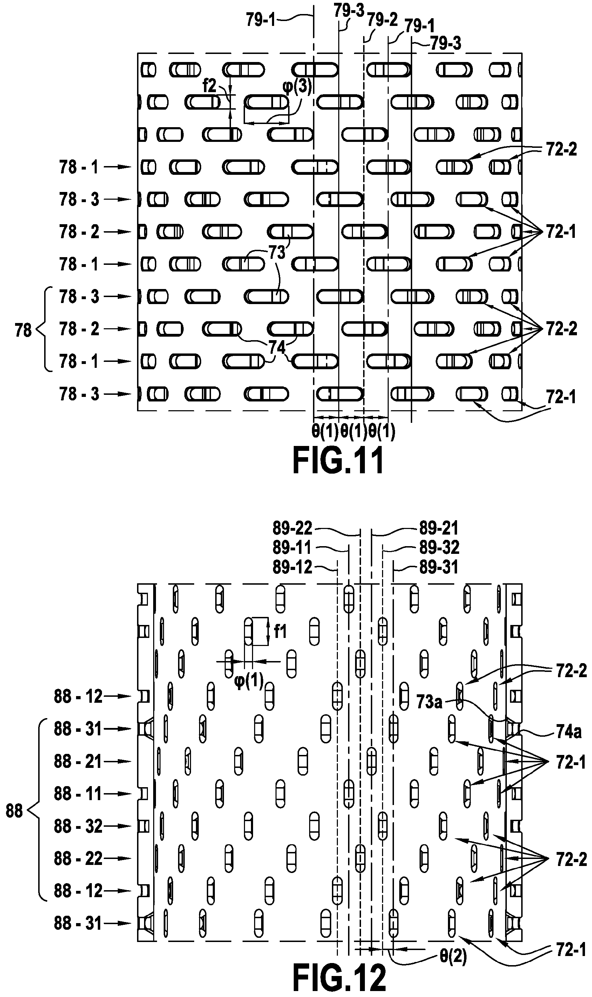

The organization of the apertures 72 will now be described with reference to Fig.7 to 12.

The sleeve 70 comprises a plurality of regularly spaced-apart rows 78 of apertures 72, each row 78 extending circumferentially (ie. in a radial plane) and comprising the same number of regularly spaced-apart apertures 72. In the present example, the sleeve 70 comprises 53 rows and each row comprises 16 apertures 72.

As already explained, each aperture 72 comprises an inner orifice 73 and an outer orifice 74. The outer orifices 74 are elongated in the circumferential direction. Every outer orifice 74 has the same opening angle φ(3) which is substantially equal to the opening angle ε(0) of the inner passages 30 (with a difference of e.g. 10% or less). Every outer orifice 74 has also the same height f(2) which is substantially equal to the height a2 of the inner passage 30 (with a difference of e.g. 10% or less). Conversely, the inner orifices 73 are elongated in the axial direction. Every inner orifice 73 has the same size. The height f(1) of the inner orifices 73 is preferably as large as possible while remaining inferior to the thickness a1 of the elements 10 in order to preserve the mechanical strength of the sleeve 70.

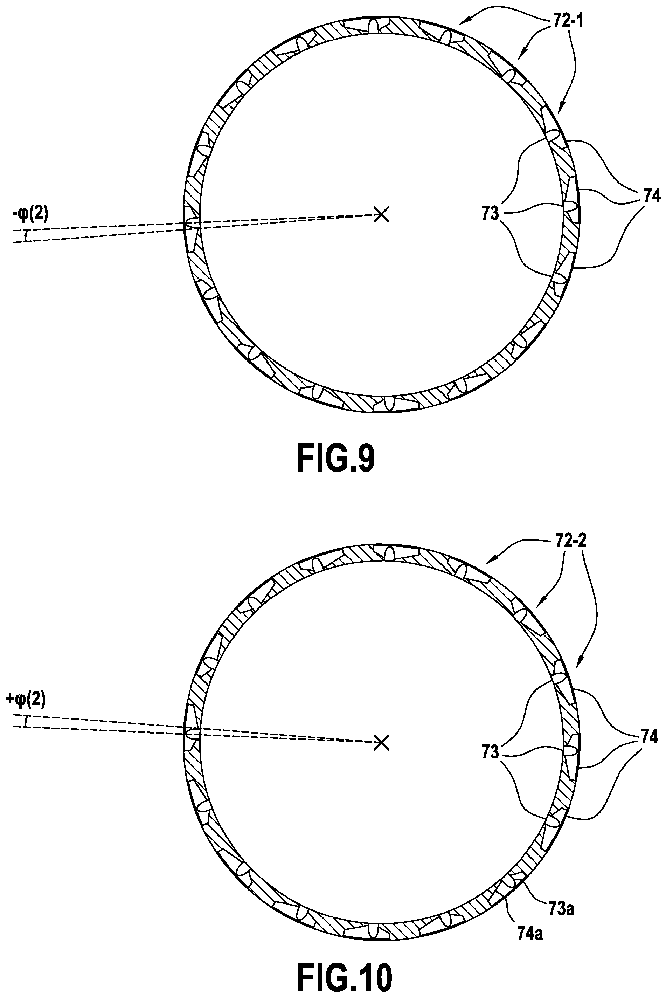

As better visible on Fig. 9 and 10, the position of the inner orifice 73 is not always the same with respect to the outer orifice 74. Particularly, in the present example, two types of apertures are provided: the apertures of the first type 72-1 have their inner orifices 73 offset to the left with respect to their outer orifices 74 when looking at the apertures 72-1 from the outer side (Fig. 9) while the apertures of the second type 72-2 have their inner orifices 73 offset to the right with respect to their outer orifices 74 when looking at the apertures 72-2 from the outer side (Fig. 10). The type of aperture 72 is always the same in a given row 78.

Most particularly, in the present example, the circumferential offset φ(2) between the center of the outer orifice 74 and the center of the inner orifice 73 is equal to 1.875°.

Also, as visible on Fig. 9, 10 and 12, irrespective of their type, each aperture 72 comprises an inner funnel portion 73a, opening at its inner orifice 73 and narrowing toward the outer direction, and an outer funnel portion 74a, opening at its outer orifice 74 and narrowing toward the inner direction. In the present example, the depth of both the inner funnel portion 73a and the outer funnel portion 74a is greater than half the thickness of the wall of the sleeve 70: consequently, the inner funnel portion 73a and the outer funnel portion 74a intersect the one with the other.

The outer orifices 74 of the apertures 72 are organized in j sets of rows 78 on the outer surface of the sleeve 70. In the present example, j=3. In each set of rows 78-1, 78-2, 78-3, the outer orifices 72 of any row 78 are aligned in the axial direction with the outer orifices of the other rows 78 so as to form columns 79-1, 79-2, 79-3.

The rows 78-1, 78-2, 78-3 of the three sets are provided in a regular alternation along the whole length of the main portion 75 of the sleeve 70. Also, the circumferential offset θ(1) between the outer orifices 72 of two succeeding rows 78 is identical along the whole length of the main portion 75 of the sleeve 70. In the present example, this circumferential offset θ(1) is equal to 7.5°.

Also, for the sake of regularity, the apertures 72 are always of the same type within a group of three successive rows, that is to say within a group comprising exactly one row of each set 78-1, 78-2, 78-3. The type 72-1, 72-2 of the apertures 72 then changes for the next group of three rows 78-1, 78-2, 78-3, and so on so forth.

As a result, when observing the inner orifices 73 of the apertures 72, the combination of the three sets of rows 78-1, 78-2, 78-3 and of the two types of apertures 72-1, 72-2, creates six different series of rows of inner orifices 88-11, 88-21, 88-31, 88-12, 88-22, 88-32, circumferentially offset the ones with respect to the others. The rows of these six series regularly alternate along the length of the main portion 75 of the sleeve 70. As a result, when scanning the sleeve from one end to the other, there is a pitch N of six rows before finding again an identical row.

Consequently, this organization provides p=6 corresponding series of columns 89-11, 89-21, 89-31, 89-12, 89-22, 89-32, each circumferentially spaced-part by a regular offset θ(2)=360°/n.N, therefore here equal to 3.75°. Consequently, in the present example, the opening angle φ(1) of each inner orifice 73 is equal to said regular offset θ(2), while the opening angle δ(1) of the discharge opening 84 of the distributor 80 is also equal to said value. As a result, in the present example, the sleeve 70 comprises 96 columns which are individually isolatable by the backwashing distributor 80.

Nevertheless, while the optimal value for the opening angle φ(1) of the inner orifices 73 is the value corresponding to the regular offset θ(2)=360°/n.N, the opening angle φ(1) of the inner orifices 73 can take other values in alternative example.

Particularly, in a first alternative example, the opening angle φ(1) of the inner orifices 73 can be greater than this regular offset θ(2)=360°/n.N. Nevertheless, in such a case, there are necessarily at least some inner orifices 73 of series of rows which overlap with inner orifices 73 of rows of another series. In such an alternative example, it is then preferable that the opening angle δ(1) of the discharge opening 84 of the distributor 80 be lower than the opening angle φ(1) of the inner orifices 73 so as to reduce the time period during which two adjacent sectors are in backflush at the same time. Most particularly, it is preferable that the opening angle δ(1) of the discharge opening 84 be lower than 2ε(1)/N- φ(1) in order to ensure that there are at least moments where each sector is effectively isolated from its adjacent sector. Therefore, such an alternative configuration may be useful to smoothen the transition between the backflush of adjacent sectors.

In a second alternative example, the opening angle φ(1) of at least some inner orifices 73 can be lower than the regular offset θ(2)=360°/n.N. In such a case, the pressure drop is artificially increased. Nevertheless, such an increased pressure drop may be useful in some cases: for instance, the value of the opening angle φ(1) of the inner orifices 73 may increase along the length of the sleeve 70 when going away from the fluid inlet 3 so as compensate for the pressure drop which normally increases with distance from the inlet 3 and, therefore, to homogenize the load all along the sleeve 70.

## Claims

1. A sleeve for a filtering unit with backwashing, the sleeve (70) being configured to be mounted coaxially inside a stack of annular filtering elements (10),
comprising apertures (72) each having an inner orifice (73) and an outer orifice (74), the outer orifice (74) of each aperture (72) being configured to face and communicate with an inner passage (30) of a filtering element (10),
wherein the apertures (72) are organized in several circumferential rows (78), each circumferential row (78) extending over a whole circumference of the sleeve (70),
wherein at least some of the apertures (72) have an outer orifice (74) elongated in the circumferential direction, and
wherein at least some of the apertures (72) have an inner orifice (73) elongated in the axial direction.

2. The sleeve as claimed in claim 1, wherein the apertures (72) are offset circumferentially along an axial direction of the sleeve (70).

3. The sleeve as claimed in claim 2, wherein the outer orifices (74) of the apertures (72) are organized in j sets (78-1, 78-2, 78-3) such that, in each set of outer orifices (74) of a first j set, the outer orifices (74) of each row (78) are aligned in the axial direction with the outer orifices (74) of one row (78) of a second j set, j being an integer greater or equal to 2, preferably greater or equal to 3.

4. The sleeve as claimed in claim 3, where the circumferential offset θ between the outer orifices (74) belonging to different sets of outer orifices (78-1, 78-2, 78-3) is a multiple of a pitch θ₀ = 360°/n.j, where n is the number of apertures (72) within each row (78).

5. The sleeve as claimed in any one of claims 1 to 4, wherein the inner orifice (73) of at least some apertures (72) is circumferentially offset with respect to the center of the outer orifice (74) of said apertures (72).

6. The sleeve as claimed in any one of claims 1 to 5, wherein the position of the inner orifice (73) of an aperture (72) with respect to the position of the outer orifice (74) thereof is variable among the plurality of apertures (72).

7. The sleeve as claimed in claim 6, wherein the sleeve (70) comprises k types of apertures (72-1, 72-2) such that the circumferential offset φ(2) of the inner orifice (73) with respect to the center of the outer orifice (74) is equal for every aperture of a given type (72-1, 72-2), k being an integer greater or equal to 2, preferably equal to 2.

8. The sleeve as claimed in claim 7, wherein k is equal to 2 and wherein the circumferential offset φ(2) of the inner orifice (73) of any aperture (72) with respect to the center of the outer orifice (74) thereof is equal to + φ(2)' or - φ(2)', where φ(2)' is an angle value strictly greater than 0°, preferably greater than 1°.

9. The sleeve as claimed in any one of claims 1 to 8, wherein the inner orifices (73) of the apertures (72) are organized in N series (88-11, 88-21, 88-31, 88-12, 88-22, 88-32) such that, in each series of inner orifices, the inner orifices (73) of any row (88) are aligned in the axial direction with the inner orifices (73) of the other rows (88), N being an integer greater or equal to 4, preferably greater or equal to 6 or 8.

10. The sleeve as claimed in any one of claims 1 to 9, wherein some apertures (72) comprise an inner funnel portion (73a) opening at the inner orifice (73) and narrowing toward the outer direction.

11. The sleeve as claimed in any one of claims 1 to 10, wherein some apertures (72) comprise an outer funnel portion (74a) opening at the outer orifice (74) and narrowing toward the inner direction.

12. The sleeve as claimed in claims 10 and 11, wherein the inner and the outer funnel portions (73a, 74a) intersect.

13. A filtering assembly for a filtering unit with backwashing, comprising a sleeve (70), as claimed in any of claims 1 to 12, and a plurality of filtering elements (10) stacked with one another, wherein each filtering element (10) has a filtering medium (22) and a plurality of inner passages (30) for conducting fluid to be filtered to the filtering medium (22), the inner passages (30) opening out on compartmented sectors.

14. A filtering unit (1) comprising a filtering assembly (90) as claimed in claim 13.

## Patentansprüche

1. Umhüllung für eine Filtereinheit mit Rückspülung, wobei die Umhüllung (70) dazu konfiguriert ist, koaxial innerhalb eines Stapels ringförmiger Filterelemente (10) montiert zu sein,
umfassend Lücken (72), die jeweils eine innere Öffnung (73) und eine äußere Öffnung (74) aufweisen, wobei die äußere Öffnung (74) jeder Lücke (72) dazu konfiguriert ist, einem inneren Durchgang (30) eines Filterelements (10) zugewandt zu sein und damit in Verbindung zu stehen,
wobei die Lücken (72) in mehreren umfänglichen Reihen (78) organisiert sind, wobei sich jede umfängliche Reihe (78) über einen gesamten Umfang der Umhüllung (70) erstreckt,
wobei mindestens einige der Lücken (72) eine äußere Öffnung (74) aufweisen, die in der umfänglichen Richtung verlängert ist, und
wobei mindestens einige der Lücken (72) eine innere Öffnung (73) aufweisen, die in der axialen Richtung verlängert ist.

2. Umhüllung nach Anspruch 1, wobei die Lücken (72) umfänglich entlang einer axialen Richtung der Umhüllung (70) versetzt sind.

3. Umhüllung nach Anspruch 2, wobei die äußeren Öffnungen (74) der Lücken (72) in j Sätzen (78-1, 78-2, 78-3) derart organisiert sind, dass in jedem Satz aus äußeren Öffnungen (74) eines ersten j Satzes die äußeren Öffnungen (74) jeder Reihe (78) in der axialen Richtung mit den äußeren Öffnungen (74) einer Reihe (78) eines zweiten j Satzes ausgerichtet sind, wobei j eine ganze Zahl größer als oder gleich 2, bevorzugt größer als oder gleich 3 ist.

4. Umhüllung nach Anspruch 3, worin der umfängliche Versatz θ zwischen den äußeren Öffnungen (74), die zu unterschiedlichen Sätzen äußerer Öffnungen (78-1, 78-2, 78-3) gehören, ein Vielfaches eines Abstands θ₀ = 360°/n.j ist, worin n die Anzahl von Lücken (72) innerhalb jeder Reihe (78) ist.

5. Umhüllung nach einem der Ansprüche 1 bis 4, wobei die innere Öffnung (73) mindestens einiger Lücken (72) umfänglich in Bezug zu der Mitte der äußeren Öffnung (74) der Lücken (72) versetzt ist.

6. Umhüllung nach einem der Ansprüche 1 bis 5, wobei die Position der inneren Öffnung (73) einer Lücke (72) in Bezug auf die Position der äußeren Öffnung (74) davon unter der Vielzahl von Lücken (72) variabel ist.

7. Umhüllung nach Anspruch 6, wobei die Umhüllung (70) k Typen von Lücken (72-1, 72-2) derart umfasst, dass der umfängliche Versatz φ(2) der inneren Öffnung (73) in Bezug auf die Mitte der äußeren Öffnung (74) für jede Lücke eines gegebenen Typs (72-1, 72-2) gleich ist, wobei k eine Ganzzahl größer als oder gleich 2, bevorzugt gleich 2, ist.

8. Umhüllung nach Anspruch 7, wobei k gleich 2 ist und wobei der umfängliche Versatz φ(2) der inneren Öffnung (73) einer beliebigen Lücke (72) in Bezug auf die Mitte der äußeren Öffnung (74) davon gleich + φ(2)' oder - φ(2)' ist, worin φ(2)' ein Winkelwert strikt größer als 0°, bevorzugt größer als 1°, ist.

9. Umhüllung nach einem der Ansprüche 1 bis 8, wobei die inneren Öffnungen (73) der Lücken (72) in N Serien (88-11, 88-21, 88-31, 88-12, 88-22, 88-32) derart organisiert sind, dass in jeder Serie innerer Öffnungen die inneren Öffnungen (73) einer beliebigen Reihe (88) in der axialen Richtung mit den inneren Öffnungen (73) der anderen Reihen (88) ausgerichtet sind, wobei N eine Ganzzahl größer als oder gleich 4, bevorzugt größer als oder gleich 6 oder 8, ist.

10. Umhüllung nach einem der Ansprüche 1 bis 9, wobei einige Lücken (72) einen inneren Trichterabschnitt (73a) umfassen, der sich an der inneren Öffnung (73) öffnet und sich hin zu der äußeren Richtung verengt.

11. Umhüllung nach einem der Ansprüche 1 bis 10, wobei einige Lücken (72) einen äußeren Trichterabschnitt (74a) umfassen, der sich an der äußeren Öffnung (74) öffnet und sich hin zu der inneren Richtung verengt.

12. Umhüllung nach den Ansprüchen 10 und 11, wobei der innere und der äußere Trichterabschnitt (73a, 74a) einander schneiden.

13. Filteranordnung für eine Filtereinheit mit Rückspülung, die eine Umhüllung (70 nach einem der Ansprüche 1 bis 12 und eine Vielzahl von Filterelementen (10), die aufeinander gestapelt sind, umfasst, wobei jedes Filterelement (10) ein Filtermedium (22) und eine Vielzahl innerer Durchgänge (30) zum Leiten von zu filterndem Fluid zu dem Filtermedium (22) aufweist, wobei sich die inneren Durchgänge (30) auf unterteilten Sektoren nach außen öffnen.

14. Filtereinheit (1), die eine Filteranordnung (90) nach Anspruch 13 umfasst.

## Revendications

1. Manchon pour une unité de filtration à contre-courant, le manchon (70) étant configuré pour être monté coaxialement à l'intérieur d'un empilement d'éléments filtrants annulaires (10),
comprenant des ouvertures (72) comportant chacune un orifice interne (73) et un orifice externe (74), l'orifice externe (74) de chaque ouverture (72) étant configuré pour faire face à et communiquer avec un passage interne (30) d'un élément filtrant (10),
dans lequel les ouvertures (72) sont organisées en plusieurs rangées circonférentielles (78), chaque rangée circonférentielle (78) s'étendant sur toute une circonférence du manchon (70),
dans lequel au moins certaines des ouvertures (72) ont un orifice externe (74) allongé dans la direction circonférentielle, et
dans lequel au moins certaines des ouvertures (72) ont un orifice interne (73) allongé dans la direction axiale.

2. Manchon selon la revendication 1, dans lequel les ouvertures (72) sont décalées circonférentiellement le long d'une direction axiale du manchon (70).

3. Manchon selon la revendication 2, dans lequel les orifices externes (74) des ouvertures (72) sont organisés en j ensembles (78-1, 78-2, 78-3) de telle sorte que, dans chaque ensemble d'orifices externes (74) d'un premier j ensemble, les orifices externes (74) de chaque rangée (78) sont alignés dans la direction axiale avec les orifices externes (74) d'une rangée (78) d'un deuxième j ensemble, j étant un nombre entier supérieur ou égal à 2, de préférence supérieur ou égal à 3.

4. Manchon selon la revendication 3, dans lequel le décalage circonférentiel θ entre les orifices externes (74) appartenant à différents ensembles d'orifices extérieurs (78-1, 78-2, 78-3) est un multiple d'un pas θ₀ = 360°/n.j, où n est le nombre d'ouvertures (72) dans chaque rangée (78).

5. Manchon selon l'une quelconque des revendications 1 à 4, dans lequel l'orifice interne (73) d'au moins certaines ouvertures (72) est décalé circonférentiellement par rapport au centre de l'orifice externe (74) desdites ouvertures (72).

6. Manchon selon l'une quelconque des revendications 1 à 5, dans lequel la position de l'orifice interne (73) d'une ouverture (72) par rapport à la position de l'orifice externe (74) de celle-ci est variable parmi la pluralité d'ouvertures (72).

7. Manchon selon la revendication 6, dans lequel le manchon (70) comprend k types d'ouvertures (72-1, 72-2) de telle sorte que le décalage circonférentiel φ(2) de l'orifice interne (73) par rapport au centre de l'orifice externe (74) est égal pour chaque ouverture d'un type donné (72-1, 72-2), k étant un nombre entier supérieur ou égal à 2, de préférence égal à 2.

8. Manchon selon la revendication 7, dans lequel k est égal à 2 et dans lequel le décalage circonférentiel φ(2) de l'orifice interne (73) d'une quelconque ouverture (72) par rapport au centre de l'orifice externe (74) de celle-ci est égal à + φ(2)' ou - φ(2)', où φ(2)' est une valeur d'angle strictement supérieure à 0°, de préférence supérieure à 1°.

9. Manchon selon l'une quelconque des revendications 1 à 8, dans lequel les orifices internes (73) des ouvertures (72) sont organisés en N séries (88-11, 88-21, 88-31, 88-12, 88-22, 88-32) de telle sorte que, dans chaque série d'orifices internes, les orifices internes (73) d'une quelconque rangée (88) sont alignés dans la direction axiale avec les orifices internes (73) des autres rangées (88), N étant un nombre entier supérieur ou égal à 4, de préférence supérieur ou égal à 6 ou à 8.

10. Manchon selon l'une quelconque des revendications 1 à 9, dans lequel certaines ouvertures (72) comprennent une partie intérieure en entonnoir (73a) s'ouvrant au niveau de l'orifice interne (73) et se rétrécissant vers la direction extérieure.

11. Manchon selon l'une quelconque des revendications 1 à 10, dans lequel certaines ouvertures (72) comprennent une partie extérieure en entonnoir (74a) s'ouvrant au niveau de l'orifice externe (74) et se rétrécissant vers la direction intérieure.

12. Manchon selon les revendications 10 et 11, dans lequel les parties intérieure et extérieure en entonnoir (73a, 74a) s'entrecoupent.

13. Ensemble de filtration pour une unité de filtration à contre-courant, comprenant un manchon (70) selon l'une quelconque des revendications 1 à 12, et une pluralité d'éléments filtrants (10) empilés l'un sur l'autre, dans lequel chaque élément filtrant (10) comprend un milieu filtrant (22) et une pluralité de passages internes (30) pour acheminer du fluide à filtrer vers le milieu filtrant (22), les passages internes (30) s'ouvrant vers l'extérieur sur des secteurs compartimentés.

14. Unité de filtration (1) comprenant un ensemble de filtration (90) selon la revendication 13.
